(19) Europäisches Patentamt
European Patent Office
Office européen des brevets

(11) Publication number: 0 292 843 B1

(12) **EUROPEAN PATENT SPECIFICATION**

(45) Date of publication of patent specification: **04.12.91** (51) Int. Cl.$^5$: **G01D 5/20**, G06K 11/06

(21) Application number: **88107882.8**

(22) Date of filing: **17.05.88**

# (54) Position detector.

(30) Priority: **28.05.87 JP 132316/87**

(43) Date of publication of application: **30.11.88 Bulletin 88/48**

(45) Publication of the grant of the patent: **04.12.91 Bulletin 91/49**

(84) Designated Contracting States: **DE FR GB IT**

(56) References cited:
**EP-A- 0 130 578**
**EP-A- 0 134 539**
**EP-A- 0 204 184**
**JP-A-60 111 918**

(73) Proprietor: **KABUSHIKI KAISHA WACOM**
**23-4 Washinomiya-cho Sakurada 5-chome**
**Kitakatsushika-gun Saitama-ken(JP)**

(72) Inventor: **Murakami, Azuma**
**207 Sky Heights 15-73 Chuo 1-chome**
**Kuki-shi Saitama-ken(JP)**
Inventor: **Taguchi, Yoshinori**
**101 Tsutsumi Heights 5-36 Higashi 2-chome**
**Kuki-shi Saitama-ken(JP)**
Inventor: **Takahashi, Kenichi**
**103 Tsutsumi Heights 5-36 Higashi 2-chome**
**Kuki-shi Saitama-ken(JP)**
Inventor: **Tanaka, Takeshi**
**102 Pritek 256-25 Nokuki Miyanojuku**
**Kuki-shi Saitama-ken(JP)**
Inventor: **Tomofuji, Yoshiaki**
**107 Tsutsumi Heights 5-36 Higashi 2-chome**
**Kuki-shi Saitama-ken(JP)**

(74) Representative: **Zipse + Habersack**
**Kemnatenstrasse 49**
**W-8000 München 19(DE)**

EP 0 292 843 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

I. Field of the invention

The present invention relates to a position detector employed for detecting positions indicated by position indicators, utililizing a magnetostrictive oscillation wave propagated through magnetostriction media.

II. Prior art

From EP-0 130 578 A1 is known a position detecting apparatus, in which the propagation of a magnetostrictive wave in a magnetostrictive transmission medium is utilized for position indication. The principle of operation is based firstly on the generation of a magnetostrictive wave in the medium by applying an electric pulse current to a first coil wound around a part of the medium; secondly on the propagation of the magnetostrictive wave in the medium with a characteristic velocity, and thirdly due to the local change of the electromagnetic coupling between the propagating mechanical wave and the accompanying magnetic field in a region where an external position-indicating magnetic field is applied to the magnetostrictive medium, a voltage is induced in a second coil which is wound around the medium nearly over its whole length. Thus, by measuring the time delay between application of the electric pulse to the first coil and the occurence of an inductive voltage in the second coil, the position of the permanent magnet used as a position indicator can be determined along the length of the magnetostrictive medium, when taking into account that the progagation speed of the magnetostrictive wave is known. Apart from describing this functional principle and a simple apparatus for applying the principle this application doesn't deal with detailed problems of such kind of position detectors.

EP-0 134 539 A2 describes a position detecting apparatus utilizing magnetostrictive waves propagating in bundles of magnetostrictive media which are arranged matrix-like to perform a 2-dimensional position-detection in a X- and a Y-direction. Determining the position of only a single position indicator this arrangement provides a high measurement speed because for each direction (X or Y) the first coils are commonly wound around the one end of all the respective magnetostrictive media, in order to excite a magnetostrictive wave in all media of the specific direction at the same time, and the respective second coils are connected in series to provide a composite output for all media of one direction. This solution has the disadvantage that two or more position indicators can't be distinguished in the matrix if they have the same (or near-by) X- or Y-components.

The position detector according to EP-0 204 184 A 1 also makes use of the same physical effect, but the aim of this application is to improve the reliability and accuracy of the measurement by utilizing a peak hold-circuit for varying the detector threshold-level.

Fig. 13 shows a position detector as has been proposed by the applicant of the present application (Japanese Patent Application No. 1983-220071; JP-A-60111918).

In this position detector of the prior art, a plurality of magnetostriction propagating media 1 of an amorphous alloy or the like containing a high percentage of iron each supports a first coil 2 wound around it's one end and a second coil 4 wound around over its length for detection of the positions indicated by the position indicators 3p, 3q. The first coil 2 is connected to a pulse current generator 5 while the second coil 4 is connected to a processor 6. A biasing magnetic field generator 7 comprising a permanent magnet is provided in opposition to the end surfaces of the magnetostriction propagating media 1, adjacent to the portions of the respective magnetostriction propagating media around which said first coil 2 is wound.

Said first coil 2 is crossed between each pair of adjacent magnetostriction propagating media and wound around each magnetostriction propagating medium 1 in the reverse direction with respect to the direction in which it is wound around the adjacent magnetostriction propagating medium 1. All second coils 4 are wound around the respective magnetostriction progagating media 1 in the same direction and are serially connected with adjacent second coils so that the connection polarity is successively reversed between adjacent second coils. Such arrangement is effective in reducing the undesired magnetic flux emitted externally to the system. External noise is cancelled or reduced between adjacent coils, because an external magnetic flux induces in adjacent coils a voltage with reversed polarity. Thus, the produced noise voltages are reduced or cancelled in the composite coil.

Application of a pulse current from the pulse current generator 5 to the first coil 2 causes an instantaneous field variation in the first coil 2 and thereby, a magnetostrictive oscillation wave to be generated in the region of the respective magnetostriction propagating media 1 around which the first coil 2 is wound. This magnetostrictive oscillation wave is propagated longitudinally through the respective magnetostriction propagating media 1 at a propagating velocity specific to the magnetostriction propagating media 1. During this propagation conversion from mechanical energy to the corresponding magnetic energy occurs in the region of the respective magnetostriction propagating media 1 in which the magnetostrictive oscillation wave exists, according to the electromechanical coupling factor (i.e., the factor representing the conversion efficiency from the mechanical energy to the corresponding electric energy or from the electric energy to the corresponding mechanical energy) specific to said regions and, in consequence, an inductive voltage is generated in the second coil 4.

Assuming that a steady magnetic field exists in a region of the magnetostriction propagating media 1, which is sufficient to increase the electromechanical coupling factor of this region, a high inductive voltage is generated in the second coil 4 when a magnetostrictive oscillation wave reaches said region. With a pair of position indicators 3p, 3q generating such a steady magnetic field, respectively, in two regions, as shown by Fig. 13, two high inductive voltages $V_1$, $V_2$ corresponding to the positions indicated by the pair of position indicators 3p, 3q are generated, as shown by Fig. 14. Detection of the positions indicated by the respective position indicators is accomplished by detecting the points in time at which the respective inductive voltages $V_1$, $V_2$ exceeded a predetermined voltage value (i.e., threshold value E).

Referring to Fig. 14 of the accompanying drawings, the time duration $T_2$ that elapses between the point in time at which the pulse current is applied to the first coil 2 to the point in time at which the inductive voltage $V_1$ is detected, is substantially equal to the time duration elapsing between the point in time at which the magnetostrictive oscillation wave is generated in the region of the magnetostriction propagating media 1 around which the first coil 2 is wound to the point in time at which said magnetostrictive oscillation wave reaches the position indicated by the position indicator 3p. Accordingly, this time duration $T_1$ so determined may be multiplied by the propagation velocity of the magnetostrictive osciallation wave in the processor 6 to calculate the distance $l_1$ between the first coils 2 and the position indicator 3p, i.e., the position (coordinates) indicated by the said position indicator 3p. The distance $l_2$ between the first coils 2 and the position indicator 3q, i.e., the position (coordinates) indicated by the position indicator 3q may be calculated on the basis of the time duration $T_2$ elapsed before detection of the inductive voltage $V_2$.

In the position detector shown by Fig. 13, the inductive voltages $V_1$, $V_2$ derived from the pair of position indicators 3p, 3q are provided as a composite output, since the second coils 4 wound around each magnetostriction propagating media 1 are connected in series.

As a consequence, the composite inductive voltage sometimes may not exceed the threshold value E as best can be seen in Fig. 15 (c), when a difference between said distances $l_1$ and $l_2$ is adequately small. Specifically, the inductive voltage $V_1$ derived from the position indicator 3p located at the distance $l_1$ has a form as illustrated by Fig. 15 (a) while the inductive voltage $V_2$ derived from the position indicator 3q has a form as illustrated by Fig. 15 (b). The combination of these inductive voltages $V_1$, $V_2$ results in a mutual cancellation between their positive and negative components, as illustrated in Fig. 15 (c). When the distance $l_1$, $l_2$ are equal to each other, the resulting detector output erroneously appears as if a single position is indicated, in spite of the actual situation that two positions are indicated.

In view of the above-mentioned disadvantage, i.e. the combinnation or composition of two inductive voltages $V_1$, $V_2$, another type of position detector has been proposed, in which both the first coils 2 and the second coils 4 are wound around the individual magnetostriction propagating media 1 so that the pulse current is separately applied to the respective first coils 2 and thereby detection of said inductive voltages as well as determination of the pertinent propagation time durations are separately achieved. With a position detector of this type, the number of the magnetostriction propagating media to be monitored inconveniently increases when the position detection device extends over a larger area and consequently the time required for determination becomes longer since the determination has to be done separately for an increased number of magnetostriction propagating media.

III. Objective of the invention

It is a principal objective of the present invention to provide a position detector in which the determination of the inductive voltages can be achieved within a time shorter than in the case of separately determining the inductive voltages for the individual magnetostriction propagating media and, in which it is possible to achieve position detection over a wider range.

IV. Measures to solve the problem

The problem is solved as described in claim 1. The dependent claims describe favourable embodiments.

V. Operation

Application of a pulse current to the first coils wound around one of the pairs of adjacent magnetostriction propagating media causes a magnetostrictive wave to be simultaneously generated in the pair of magnetostriction propagating media and then propagate through the media. This magnetostrictive wave causes the inductive voltage to be generated in the second coils wound around the pair of magnetostriction propagating media and such inductive voltage has the highest value at the position where the associated second coils are subjected to the steady magnetic field generated by one of the magnets of the position indicators. In view of such fact, the time duration elapsing from the point in time at which said pulse current was applied to the first coils to the point in time at which this highest inductive voltage is generated, is determined.

A predetermined time after the above-mentioned operation was performed on the first pair of magnetostriction propagating media, a similar operation is repeated on the second pair of magnetostriction propagating media and so forth.

By repeating a similar operation successively on the respective pairs of magnetostriction propagating media, it is possible to detect the positions indicated by the respective position indicators in a time period as short as at least one-half of the time period taken by the arrangement of prior art, e.g., the arrangement in which a plurality of magnetostriction propagating media are separately provided with first and second coils wound therearound.

VI. Embodiments

The present invention will now be described in detail, by way of specific embodiment and with reference to the accompanying drawings:

- Fig. 1 is a perspective view schematically illustrating an embodiment of the position detector constructed according to the teachings of the present invention;
- Fig. 2 is a diagram showing electromechanical coupling factor versus magnetic bias;
- Fig. 3 is a plane view illustrating a position detector for two-dimensional position detection;
- Fig. 4 is a sectional view taken along a line IV-IV in Fig. 3;
- Fig. 5 is a block diagram illustrating an electric circuit arrangement for generation of the pulse currents and evaluation of the position signals in a two-dimensional position detector according to Fig. 3;
- Fig. 6 is a graphic diagram showing the inductive voltage generated in a position detection coil wound around each of the magnetostriction propagating media as a function of time;
- Fig. 7 is a side view illustrating coils and magnetostriction propagating media arranged at regular intervals;
- Fig. 8 is a view similar to Fig. 7 but with the magnetostriction propagating media arranged at irregular intervals;
- Fig. 9 is a graphic diagram showing the variation of the maximum inductive voltage as a position indicator is moved transversely of the magnetostriction propagating media;
- Fig. 10 is a graphic diagram showing the variation in the inductive voltage as a function of time by changing the position of a position indicator transverse to the respective magnetostrictive medium.
- Fig. 11 is a position detector similar to that in Fig. 1, but illustrated is another embodiment constructed in accordance with the teachings of the present invention;
- Fig. 12 is a perspective view showing by way of example an eraser suitable for use with a position detector according to the present invention;
- Fig. 13 is a view similar to Fig. 1 but schematically illustrating a position detector of prior art; and
- Fig. 14 and Fig. 15 are graphic diagrams showing a variation in the inductive voltage occurring in the position detector of prior art as a function of the time, when a pair of position indicators are relatively remote from each over longitudinally of the magnetostriction propagating media as shown by Fig. 14 or when the pair of position indicators are close to each other as shown by Fig. 15.

Referring to Fig. 1 which schematically illustrates an embodiment of the position detector constructed in accordance with the present invention. There are provided a suitable number of magnetostriction propagating media 11 made of material having a magnetostrictive effect and extending parallel with another. Although these magnetostriction propagating media may be of any ferromagnetic material, these magnetostriction propagating media are preferably made of material having a sufficiently high magnetostrictive effect to generate an intense magnetostrictive wave and a holding force sufficiently small that the magnetostriction propagating media are not readily magnetized when a magnet is placed adjacent thereto. As such material, amorphous alloys or the like of high iron content are preferable. The suitable amorphous alloys include $Fe_{67}Co_{18}B_{14}Si_1$ -

(atom %) and $Fe_{81}B_{13.5}Si_{3.5}C_2$ (atom %). Each of the magnetostriction propagating media 11 is long and narrow, preferably in the form of a ribbon having a rectangular cross-section or wire having a circular cross-section. When embodied in the form of ribbon, such ribbon may be conveniently several mm wide and several µm to several ten µm from the viewpoint of productivity as well as characteristics. It is practically possible to obtain such amorphous alloys as a sheet having a thickness of 20 to 50 µm, so that such sheet may be cut into desired ribbon or wire. In the present embodiment, the magnetostriction propagating media 11 of $Fe_{81}B_{13.5}Si_{3.5}C_2$ (atom %) are used in the form of ribbon which is 2 mm wide and 0.02 mm thick.

Said magnetostriction propagating media 11 are provided at respective one ends with associated first coils 12 wound therearound. It should be noted that, although this embodiment employs a single turn, the number of turns may be two or more. The first coils 12 function to generate instantaneous field variations perpendicularly to a plane defined by the coils and thereby to generate a magnetostrictive wave in a region of the respective magnetostriction propagating media 11 around which said first coils are wound. The first coils 12 are connected through a first multiplexer 13 to a pulse current generator 14. Pairs of first coils 12 associated with respective pairs of adjacent magnetostriction propagating media 11 are connected in series and a pulse current is separately applied to each pair of coils 12 as selected by the first multiplexer 13. Accordingly, the magnetostriction propagating media 11 must be even-numbered. Eight magnetostriction propagating media are provided in this embodiment. The respective magnetostriction propagating media are designated by reference numerals $11a_1$, $11a_2$,... ..., $11d_2$ wherein letters a, b, c and d represent the particular pair of media while indices 1 and 2 represent the particular magnetostriction propagating media constituting the respective pairs. Various members associated with these magnetostrictive media 11 are designated in the same manner. It should be understood that the pulse current generator 14 is adapted to supply the first coils 12 with sufficiently high pulse current to generate a magnetostrictive wave.

There is provided a biasing magnetism generator 15 such as a permanent magnet opposed to the end surfaces of the magnetostriction propagating media 11 adjacent to the respective first coils 12, in order to generate biasing magnetic fields in the regions of the respective magnetostriction propagating media 11 around which the first coils 12 are wound. The field direction is arranged longitudinally along the magnetostriction propagating media 11. Generation of such biasing magnetic fields enable relatively small current to generate the magnetostrictive wave of relatively large magnitude. More specifically, the electromechanic coupling factor of the magnetostriction propagating media 11 takes the maximum value when applied with a predetermined level of the biasing magnetic field, as seen in Fig. 2. In this manner, said regions of the respective magnetostriction propagating media 11 carrying the first coils 12 may be maintained to be applied with said magnetic bias to achieve an efficient generation of the magnetostrictive wave.

Second coils 16 are wound around the respective magnetostriction propagating media 11 over their longitudinal extents along which desired position detections are to be performed. Like the first coils 12, these second coils 16 also are separately provided for the respective pairs of adjacent magnetostriction propagating media 11 and the respective pairs correspond to the respective pairs of magnetostriction propagating media 11 for which the first coils 12 are separately provided. These second coils 16 are provided to detect inductive voltages generated by the magnetostrictive waves propagated through the associated magnetostriction propagating media 11 and wound therearound in the same direction so that the polarity is reversed for every pair of magnetostriction propagating media 11. These second coils 16 are connected by a second multiplexer 17 to a processor 18.

The processor 18 functions to supply both the first multiplexer 13 and the second multiplexer 17 with signals, to connect the first coils 12 on the respective pair of magnetostriction propagating media 11 to the pulse current generator 14 and to connect the second coils 16 on said respective pair of magnetostriction propagating media 11 to said processor 18.

Referring to Fig. 1, reference numerals 19p and 19q designate position indicators adapted to generate steady magnetic fields. Although the present embodiment utilizes bar magnets as position indicators each having a diameter of 3 mm and a length of 50 mm they may be of various configurations such as plate-like, ring-like and angular magnet or electromagnets may alternatively be used. According to the present embodiment, the positions indicated by these position indicators 19p, 19q are to be detected.

The first coils 12 are carried by magnetostriction propagating media 11 in a manner as shown by Fig. 7. Specifically, the respective magnetostriction propagating media 11 are enclosed by associated cylindrical holders 20 around which said second coils 16 are wound. The first coils 12 are wound around these holders 20 or around the respective one ends of said magnetostriction propagating media 11 themselves projected from these holders 20 and, after wound by a predetermined number of turns, each of said first coils 12 has its turn-terminals 12u crossing each other on the lower side of the associated magnetostriction propagating medium 11, then connected to a print substrate 21. The first coils 12 of the associated pair of adjacent magnetostriction propagating media 11 are interconnected on this print substrate 21 and then connected to said first multiplexer 13. It should be understood that, in the embodiment shown by Fig. 7, all the individual magnetostriction propagating media 11 are arranged at equidistant intervals.

Two pairs of the above-mentioned assemblies comprising the components such as the magnetostriction propagating media 11 and the first coils 12 are combined in the orthogonal relationship as seen in Fig. 3 to provide a two-dimensional position detector in which one pair is used to detect a X-position while the other pair is used to detect a Y-position. The pair of said assemblies used to detect the X-position is designated by additional reference x and the pair of said assemblies used to detect the Y-position is designated by additional reference y. In the same manner as previously mentioned with respect to Fig. 11, the particular pairs of magnetostriction propagating media 11 including the first and the second coils are designated by letters a, b, c, d, ... as the further additional references and the individual assemblies constituting the respective pairs are designated by indices 1 and 2 as still other additional references. In this manner, the respective assemblies are expressed as the magnetostriction propagating media $11xa_1$, $11xa_2$, ..., $11xd_2$, $11ya_1$, $11ya_2$, ..., $11yd_2$.

The magnetostriction propagating media 11x and 11y combined in the orthogonal relationship are placed one on another as seen in Fig. 4, contained in a casing 22 of nonmagnetic metal and fixed in place with adhesive or the like. Although the biasing magnetic field generator 15 is shown as stationarily disposed on the bottom of the casing 22 so as to be opposed to the one end surface of the magnetostriction propagating media 11, said generator 15 may be disposed above, beneath or laterally of said magnetostriction propagating media 11. The top of the casing 22 is closed by a cover 23 made of nonmagnetic metal or synthetic resin, along the top surface of which said position indicators 19p, 19q may be moved to perform the operation of position indication.

Fig. 5 is block diagram illustrating an electric circuit arrangement corresponding to the X- and Y-position detector shown by Fig. 3 and 4. Referring to Fig. 5, reference numerals 13x and 13y designate multiplexers respectively associated with the first coils 12x, 12y of X-and Y-directions, respectively; reference numerals 14x and 14y designate pulse current generators for X- and Y-directions, respectively; and reference numerals 17x and 17y designate multiplexers respectively associated with the second coils 16x, 16y of X- and Y-directions, respectively. The processor 18 comprises a microprocessor 31, multiplexers 32, 33, a monostable multivibrator (monoflop) 34, a counter 35, a clock pulse generator 36, an amplifier 37 and a comparator 38.

Now operation of said X- and Y-position detector will be described on the assumption that two positions simultaneously indicated by the pair of position indicators 19p, 19q are to be detected.

It is first assumed that position detector of Fig. 1 is used to detect the X-position and the position indicator 19p is positioned above the magnetostriction propagating media $11xa_1$ with interposition to the cover 23 of the casing 22 at a distance of lpx in the X-direction from a center of the coil plane defined by the associated first coil 12x while the other position indicator 19q is positioned above the magnetostriction propagating medium $11xc_2$ at a distance of lqx in the X-direction from a center of the coil plane defined by the associated first coil 12x. It is then assumed that the position detector of Fig. 1 is used to detect the Y-position and the position indicator 19p is positioned above the magnetostriction propagating medium $11yc_2$ at a distance of lpy in the Y-direction from a center of the coil plane defined by the associated first coil 12y while the other position indicator 19q is position above the magnetostriction propagating medium $11yd_1$ at a distance of lqy in the Y-direction from a center of the coil plane defined by the associated first coil 12y. Thus, it is assumed that the respective magnetostriction propagating media $11xa_1$, $11yc_2$, $11xc_2$, $11yd_1$ are engaged by respective position indicators 19p, 19q with a magnetic field sufficient to increase the electromechanical coupling factor.

Upon reception of an instruction signal for start of determination as a result of operation of appropriate switching means or the like (not shown), the microprocessor 31 provides a direction selecting transfer signal to the multiplexers 32, 33 and thereby selects the pulse current generators 14x, 14y and the direction of the second coils to be measured. The microprocessor 31 also provides control signals for the first multiplexers 13x, 13y and the second multiplexers 17x, 17y to select the respective first pairs of coils of the X- and Y-direction. Thus, the first coils $12xa_1$, $12xa_2$ and the second coils $16xa_1$, $16xa_2$ of the first X-direction pair and the first coils $12ya_1$, $12ya_2$ and the second coils $16ya_1$, $16ya_2$ of the first Y-direction pair are independently selected. For example, the microprocessor 31 supplies through the multiplexer 32 a trigger pulse to the pulse current generator 14x which supplies, in turn, pulse current to the first coils $12xa_1$, $12xa_2$ of the X-direction. The trigger pulse is also applied through the monostable multivibrator 34 to the counter 35 which is then reset and starts to count clock pulses provided from the clock pulse generator 36. This clock pulse generator 36 has a pulse repetition frequency on the order of 100 MHz.

When the pulse current generator 14x is activated and the pulse current generated is applied to the first X-direction coils $12xa_1$, $12xa_2$, instantaneous field variations accur in these first coils $12xa_1$, $12xa_2$, generating magnetostrictive waves in the regions of the magnetostriction propagating media $11xa_1$, $11xa_2$ around which the first coils $12xa_1$, $12xa_2$ are wound.

A magnetic field is generated as the pulse current flows through the first coils 12. It should be noted here that the direction in which the current flows through the portion of the coil extending from the turn-terminal 12u to the print substrate 21 is reverse to the direction in which the current flows through the circular portion of the coil directly wound around the magnetostriction propagating medium $11xa_1$, since the first coil $12xa_1$ crosses itself at the turn-terminals 12u. Accordingly, magnetic flux developing around these portions have their directions reverse to each other so that the corresponding undesired magnetic flux emitted externally as noise advantageously is cancelled and undesirable effects are reduced. This is true also for the other first coil 12x and for the first Y-direction coils 12y.

The magnetostrictive waves generated in the manner as has been mentioned above are propagated at a specific propagation velocity (approximately 5000 m/sec.) longitudinally through the respective magnetostriction propagating media $11xa_1$, $11xa_2$. During such propagation, if the magnetostriction propagating media $11xa_1$, $11xa_2$ are placed within a steady magnetic field, inductive voltages are generated in the respective second coils $16xa_1$, $16xa_2$ under the effect of said steady magnetic fields.

The position indicator 19p is positioned at a point above the magnetostriction propagating medium $11xa_1$, as has previously been assumed, and said inductive voltage is generated in the second coil $16xa_1$ after a propagation time delay $T_{px}$ indicating the position of the position indicator 19p. This is illustrated by Fig. 6(a), in which the time t is plotted as abscissa and the variation in the inductive voltage is plotted as ordinate. As shown in Fig. 6(a), a pulse-like high inductive voltage Vpx appears when the magnetostrictive wave generated in said region of the first coil $12xa_1$ after propagated through the magnetostriction propagating medium $11xa_1$, reaches the position at which position indicator 19p generates a magnetic field sufficient to increase the electromechanical coupling factor of this magnetostriction propagating medium $11xa_1$. The time delay $T_{px}$ from the instant at which the pulse current is applied to the first coil $12xa_1$ to the instant at which the inductive voltage $V_{px}$ exceeds a predetermined threshold value E, substantially corresponds to the propagation time duration of the magnetostrictive wave through the magnetostriction propagating medium $11xa_1$ from the position of the first coil $12xa_1$ to the position indicated by the indicator 19p.

The inductive voltage $_{Vpx}$ generated in said second coil $16xa_1$ is supplied through the second multiplexer 17x to the amplifier 37 and, after amplification, to the comparator 38. The comparator 38 compares this inductive voltage with the threshold value E and, when the inductive voltage $V_{px}$ exceeds the threshold value E, supplies a stop pulse to the counter 35, causing the latter to terminate counting. In this manner, the counter 35 provides a digital value corresponding to the time duration elapsing from the instant at which the pulse current is applied to the first coil $12xa_1$ until the instant at which the inductive voltage $V_{px}$ generated in the second coil $16xa_1$ exceeds a predetermined threshold value E. This digital value also corresponds to the time duration required for propagation of the magnetostrictive wave through the magnetostriction propagating medium $11xa_1$ at the predetermined propagation velocity from the po of the first coil $12xa_1$ to the position indicated by the position indicator 19p, i.e. by the distance of lpx in the X-direction. The microprocessor 31 reads the count value of the counter 35 as a first X-position data $X_1$.

After a predetermined time has elapsed, the microprocessor 31 provides the first multiplexers 13x, 13y and the second multiplexers 17x, 17y with a control signal indicating that the respective second pairs of coils shall be selected so that the first coils $12xb_1$, $12xb_2$ as well as the second coils $16xb_1$, $16xb_2$ of the second pair of X-direction are selected to be operated. At the same time, the microprocessor 31 outputs a trigger pulse to the multiplexer 32 and the monostable multivibrator 34 in the same manner as previously described with respect to the first pair of X-direction. This trigger pulse resets the counter 35 and activates the pulse current generator 14x to apply a pulse current to the first coils $12xb_1$, $12xb_2$ of the X-direction. In response, magnetostrictive waves are generated in the regions of the respective magnetostriction propagating media $11xb_1$, $11xb_2$ along which the respective first coils $12xb_1$, $12xb_2$ are wound.

The inductive voltages generated due to these magnetostrictive waves in the respective second coils $16xb_1$, $16xb_2$ of the X-direction are supplied, just as in the previously mentioned case, through the second multiplexer 17x to the amplifier 37 and to the comparator 38 in which these inductive voltages are compared with the threshold value E. Because in this case none of the position indicators is placed above the magnetostriction propagating media $11xb_1$, $11xb_2$, no inductive voltage in excess of the threshold value E is generated, and hence no stop pulse required to obtain the digital value is produced.

The similar operation may be successively performed on the respective pairs of the first coils 12x and the second coils 16x to achieve desired position detection for every pair of the magnetostriction propagating media 11x. When the first coils $12xc_1$, $12xc_2$ and the second coils $16xc_1$, $16xc_2$ associated with the pair including the magnetostriction propagating medium $11xc_2$, indicated in this example by the position indicator 19q, are selected, an inductive voltage Vqx exceeding the threshold value E is generated in the second coil $16xc_2$, as shown in Fig. 6(b). Counter 35 provides a digital value corresponding to the time duration Tqx elapsing from the instant at which the first coils $12xc_1$, $12xc_2$ are applied with the pulse current to the instant at which the magnetostrictive wave generated thereby reaches the position indicated by the position indicator 19q and an inductive voltage pulse Vqx in excess of the threshold value E is detected, i.e., the distance lqx in X-direction. Said digital value provided by the counter 35 is read by the microprocessor 31 as a second X-position data $X_2$.

Upon completion of the position detecting operation with respect to the X-direction, the microprocessor 31 provides a Y-direction selecting transfer signal to the multiplexers 32, 33 and at the same time selects the pulse current generator 14y and the second multiplexer 17y. The microprocessor 31 successively provides a control signal selecting the respective pairs of coils of X- and Y-directions by switching the first multiplexers 13x, 13y and the second multiplexers 17x, 17y. Furthermore, the microprocessor 31 successively provides a trigger pulse to the multiplexer 32 and the monostable multivibrator 34. In this way, the position detection may be achieved for every pair of magnetostriction propagating media $11ya_1$, $11ya_2$ ...., $11yd_1$, $11yd_2$ just as in the case of the X-direction position detection.

When the first coils $12yc_1$, $12yc_2$ and the second coils $16yc_1$, $16yc_2$ associated with the pair including the magnetostriction propagating medium $11yc_2$ are selected and when the first coils $12yd_1$, $12yd_2$ and the second coils $16yd_1$, $16yd_2$ associated with the pair including the magnetostriction propagating medium $11yd_1$ are selected, the inductive voltages in excess of the threshold value E are detected in the respective second coils $16yc_2$, $16yd_1$ and the digital values corresponding to the distances lpy, lqy in the Y-direction are provided by the counter 35. The microprocessor 31 reads these digital values provided by the counter 35 as the first and second Y-position data $Y_1$ and $Y_2$.

The X-position data $X_1$, $X_2$ and the Y-position data $Y_1$, $Y_2$ obtained in this manner in the form of digital values are temporarily stored in the microprocessor 31 so that they may be outputted to a computer or the like if necessary. As long as the determination start instructing signal continues to be applied to the microprocessor 31, said operation of determination is repeated and the determined value is correspondingly updated. Upon reception of a data input instructing signal generated by operation of appropriate switch means or the like-(not shown), the microprocessor 31 outputs said X- and Y-position data $X_1$, $X_2$ and $Y_1$, $Y_2$ in the form of digital values at the current instants as the input values are acquired. Such operation may be repeated to obtain the position-data successively as indicated by the position indicators.

With the present embodiment, the position indicated by the position indicator 19p or 19q is detected by each set of paired magnetostriction propagating media 11. Therefore, the inductive voltages are generated in at least a pair of the second coils 16 wound around the associated pair of adjacent magnetostriction propagating media 11. Assuming that the position indicator 19 is moved transversely of the magnetostriction propagating media 11, said inductive voltage will have its maximum value vary as illustrated by Fig. 9, in which a cross-section of the arrangement of the magnetostriction propagating media 11 is depicted on the abscissa and the maximum value of the inductive voltage is indicated on the ordinate. Circles drawn by broken lines along the abscissa represent the respective magnetostriction propagating media $11xa_1$, $11xa_2$, $11xb_1$, $11xb_2$ arranged at equidistant intervals and the corresponding maximum value of the inductive voltage varies as shown by the curves plotted by broken lines.

When the position indicator 19 is located substantially in the middle between the paired magnetostriction propagating media $11xa_1$, $11xa_2$ (or $11xb_1$ $11xb_2$), high inductive voltages are generated in both the magnetostriction propagating media $11xa_1$, $11xa_2$. These inductive voltages are combined into a peak amplitude which is the highest of those occurring in all cases. Deviation of the position indicator 19 from said middle position towards any of the paired magnetostriction propagating media results in a higher inductive voltage being generated in the magnetostriction propagating medium 11 closer to the position indicator 19 while a lower inductive voltage being generated in the magnetostriction propagating medium 11 remote from the position indicator 19, so that the maximum value of the combined inductive voltages decreases as the deviation from the middle position increases. When the position indicator 19 is located intermediately of the magnetostriction propagating media $11xa_2$, $11xb_1$ which are adjacent to each other but respectively belong to different pairs, the maximum value of the inductive voltage further decreases. This maximum value at a middle position between these magnetostriction propagating media $11xa_2$, $11xb_1$ is indicated as Vm in Fig. 9. Accordingly, the threshold value E has to be set to a level lower than Vm when the magnetostriction propagating media 11 are arranged at equidistant intervals. The threshold value E set to such lower level may lead to a malfunction, since inductive noise voltages which should be suppressed tend to be detected.

When the difference between the highest and lowest inductive voltages that must both be detected is unacceptably large, the instant at which the high inductive voltage exceeds the threshold value E and the instant at which the low inductive voltage exceeds said threshold value deviate from each other, as shown in Fig. 10, even when the position indicator 19 is held on the same position. More specifically, the high inductive voltage indicated by solid line is detected at $T_1$ to exceed the threshold value E while the low inductive voltage indicated by broken line is detected at $T_2$ to exceed said threshold value E. Thus, the detection points deviate with respect to each other.

To overcome this problem, it is important to increase the threshold value E and to reduce the difference between the high and low inductive voltages. When the magnetostriction propagating media 11 are arranged at equidistant intervals, the intervals may be made closer in order to overcome this problem. However, this would result in a increased number of the magnetostriction propagating media 11 to be arranged within a range over which positions must be detected.

In view of such inconvenience, a spacing between the magnetostriction propagating media $11xa_1$, $11xa_2$ belonging to the same pair is made larger than a spacing between the magnetostriction propagating media $11xa_2$, $11xb_1$ which are adjacent to each other but belong to the different pairs. The maximum value of the inductive voltage versus the arrangement of the magnetostriction propagating media $11xa_1$, $11xa_2$, $11xb_1$, $11xb_2$ in this case is illustrated by solid lines in Fig. 9. As shown, the spacing between the magnetostriction propagating media $11xa_1$, $11xa_2$ belonging to the same pair is enlarged while the spacing between the magnetostriction propagating media $11xa_2$, $11xb_1$ which are adjacent to each other but belong to different pairs is reduced with respect to the case in which all the individual magnetostriction propagating media 11 are arranged at equidistant intervals. Thus, the variation of the maximum value of the inductive voltage is reduced. Additionally, when the position indicator 19 is located in a middle position between the magnetostriction propagating media $11xa_2$, $11xb_1$ being adjacent to each other but belonging to different pairs, the position indicator 19 is closer to these magnetostriction propagating media 11 than when all the individual magnetostriction propagating media 11 are arranged at equidistant intervals. As a result, the generated inductive voltage is correspondingly increased and this permits the threshold value E to be set to a sufficiently high level to avoid any malfunction.

It has been found, that with the magnetostriction propagating media 11 being equidistant arranged, the position can be detected substantially with a desired accuracy when said magnetostriction propagating media are arranged at intervals of approximately 21 mm. With the magnetostriction propagating media 11 being arranged at irregular intervals, it has been found that the spacing between the magnetostriction propagating media 11 belonging to the same pair may be set to approximately 32 mm while the spacing between the adjacent magnetostriction propagating media 11 belonging to the different pairs may be set to approximately 10 mm to detect the positions with a desired accuracy. With the position detector comprising eight magnetostriction propagating media 11, the distance between the outermost magnetostriction propagating media 11 is approximately 147 mm when these magnetostriction propagating media are arranged at regular intervals and said distance is approximately 158 mm slightly larger than in the former case. Accordingly, the number of magnetostriction propagating media 11 may be reduced with the position detector comprising the magnetostriction propagating media 11 arranged at irregular intervals with respect to the position detector comprising the magnetostriction propagating media 11 arranged at regular intervals for a given range of detection.

Another embodiment of the position detector constructed in accordance with the teachings of the present invention is shown in Fig. 11. In this embodiment, the first coils 12 and the second coils 16 are further divided into several groups, respectively, so that the first coils 12 and the second coils 16 associated with a certain pair belonging to each group may be simultaneously selected to perform the desired position detection.

Referring to Fig. 11, reference numerals 13a, 13b designate first multiplexers and reference numerals 17a, 17b designate second multiplexers. The first multiplexer 13a is provided to connect selectively the first coil pair 12a or 12b to a pulse current generator 14 while the first multiplexer 13b is provided to connect selectively the first coil pair 12c or 12d to said pulse current generator 14. The second multiplexer 17a is provided to connect selectively the second coil pair 16a or 16b to a processor 18 while the second multiplexer 17b is provided to connect selectively the second coil pair 16c or 16d to said processor 18. The respective multiplexers 13a, 13b, 17a, 17b are supplied from the processor 18 with the same selection signals so that the position detection may be simultaneously achieved on the pair of magnetostriction propagating media 11a, 11b and the pair of magnetostriction propagating media 11c, 11d.

According to the construction of this embodiment, it is possible to perform the position detection simultaneously on two pairs of magnetostriction propagating media 11 and, therefore, the time period required to complete the position detected on all the magnetostriction propagating media 11 can be one half or shorter relative to the case in which the first coils and the second coils are not divided into the several groups.

Although the present invention has been described hereinabove as the first coils 12 being used to generate the magnetostrictive wave and the second coils 16 being used to detect the inductive voltage, the reversed arrangement is also possible such that the second coils 16 are used to generate the magnetostrictive wave while the first coils 12 are used to detect the inductive voltage. In such a case, said magnetostrictive wave is generated immediately beneath the position indicator 19 and the inductive voltage generated when this magnetostrictive wave reaches the associated first coil 12 is detected.

When position detection is performed according to this embodiment, no more than one position indicator may be simultaneously located above the magnetostriction propagating media 11 belonging to the same pair. This requirement is easily met when the positions indicated by a pair of position indicators 25p, 25q are always spaced from each other by a predetermined distance as in an eraser 24 used for erasure of an electronic blackboard or the like, shown in Fig. 12, are to be detected. Specifically, the spacing between the magnetostriction propagating media 11 paired to be used for the position detection is appropriately selected with respect to said predetermined distance between the position indicators 25p, 25q so that the pair of position indicators 25p, 25q cannot be located simultaneously above the magnetostriction propagating media 11 of the same pair.

VII. Effect of invention

As will be apparent from the foregoing description, the position detector constructed according to the present invention enables the position detection to be performed simultaneously on each pair of adjacent magnetostriction propagating media and thereby enables the position detection to be achieved in one half or shorter time relative to the case in which the position detection is performed on the individual magnetostriction propagating media. Within the same time period, it is possible for the present invention to achieve the position detection over a wider range.

Furthermore, the multiplexers of this invention may have fewer channels or choices than in the position detector of prior art adapted for position detection based on the individual magnetostriction propagating media. The number of parts may be correspondingly reduced, making a cost-efficient position detector available.

Additionally, the feature of the present invention such that the spacing between the magnetostriction propagating media belonging to the same pair is dimensioned larger than that between the magnetostriction propagating media which are adjacent to each other but belong to the different pairs, makes it possible to minimize malfunctions and thereby makes it possible to reduce the number of magnetostriction propagating media with respect to the position detector comprising the magnetostriction propagating media arranged at regular intervals. In this manner, this feature also makes a cost-efficient position detector available.

**Claims**

1. A position detector comprising a plurality of magnetostriction propagating media (11) extending substantially in parallel with one another, first coils (12) wound around the respective one ends of said plurality of magnetostriction propagating media (11), and second coils (16) wound around respective extents of said plurality of magnetostriction propagating media (11), position indicators (19) adapted to generate steady magnetic fields; wherein a pulse current is applied to first coils (12) or second coils (16) to generate a magnetostrictive oscillation wave in regions of the magnetostriction propagating media (11) around which the first coils (12) are wound or at positions indicated by the position indicators (19), then measuring a propagation time interval through the media (11) elapsing from the point in time at which said magnetostrictive oscillation wave has been generated to a point in time at which said magnetostritive oscillation wave reaches the regions indicated by the position indicators (19) or the regions of the magnetostriction propagating media (11) around which the first coils (12) are wound, by detecting an inductive voltage generated in the respective other of said first coils (12) or said second coils (16) after arrival of the wave, and on the basis of said measured time interval, the positions are determined, said position detector being **characterized** by that adjacent two of said plurality of magnetostriction media (11) are respectively paired, said respective pairs of magnetostriction propagating media (11) are individually wound with said first coils (12) and said second coils (16) so as to generate said magnetostrictive oscillation wave in said respective pairs, and the positions indicated by said position indicators (19) are detected.

**2.** A position detector as recited in claim (1), wherein said plurality of magnetostriction media (11) are arranged at regular intervals.

**3.** A position detector as recited in claims (1), wherein each of said paired magnetostriction propagating media (11) is spaced from the adjacent paired magnetostriction propagating media (11) by an interval larger than that by which the individual magnetostriction propagating media (11) of the respective pairs are spaced from each other.

**4.** A position detector as recited in claim (1), wherein said first coils (12) have a plurality of turns.

**5.** A position detector as recited in claim (1), wherein said first coils (12) are crossed at their turn terminals associated with the respective magnetostriction propagating media (11) so that the electric current flowing through said first coils (12) are reversed in its direction at said turn terminals between the portions of said first coils (12) wound around the respective magnetostriction propagating media (11) and the remaining portions thereof.

**6.** A position detector as recited in claim (1), wherein said plurality of magnetostriction propagating media (11) are divided into a plurality of groups and the adjacent magnetostriction propagating media (11) are respectively paired within each of said groups.

**7.** A position detector as recited in claim (1), wherein said plurality of magnetostriction propagating media (11) are arranged in a single orientation so as to detect one-dimensional position.

**8.** A position detector as recited in claim (1), wherein said plurality of magnetostriction propagating media (11) are arranged in orthogonal two directions so as to detect two-dimensional position.

## Revendications

**1.** Détecteur de position comprenant une pluralité de supports de propagation magnétostrictifs (11) s'étendant pratiquement parallèles l'un à l'autre, des premières bobines (12) enroulées autour des premières extrémités respectives de ladite pluralité de supports de propagation magnétostrictifs (11), et des secondes bobines (16) enroulées autour des prolongements respectifs de ladite pluralité des supports de propagation magnétostrictifs (11), des indicateurs de position (19) prévus pour produire des champs magnétiques permanents ; dans lesquels un courant impulsionnel est appliqué aux premières bobines une (12) ou aux secondes bobines (16) pour produire une onde d'oscillation magnétostrictive dans des régions des supports de propagation magnétostrictifs (11) autour desquelles les premières bobines (12) sont enroulées ou à des positions indiquées par les indicateurs de position (19), mesurer ensuite un intervalle de temps de propagation à travers les supports (11) s'écoulant depuis le moment auquel l'onde d'oscillation magnétostrictive a été produite au moment auquel l'onde d'oscillation magnétostrictive atteint les régions indiquées par les indicateurs de position (19) ou les régions des supports de propagation magnétostrictifs (11) autour desquelles les premières bobines (12) sont enroulées, en détectant une tension induite produite dans les autres bobines respectives desdites premières bobines (12) ou desdites secondes bobines (16) après l'arrivée de l'onde, et sur la base dudit intervalle de temps mesuré, les positions sont déterminées, ledit détecteur de position étant caractérisé en ce que deux supports adjacents de ladite pluralité de supports magnétostrictifs (11) sont respectivement mis en paires, lesdites paires respectives des supports de propagation magnétostrictifs (11) sont enroulées individuellement avec lesdites premières bobines (12) et lesdites secondes bobines (16) de façon à produire ladite onde d'oscillation magnétostrictive dans lesdites paires respectives, et les positions indiquées par lesdits indicateurs de position (19) sont détectées.

**2.** Détecteur de position selon la revendication 1, dans lequel ladite pluralité de supports magnétostrictifs (11) sont disposés à des intervalles réguliers.

3. Détecteur de position selon la revendication 1, dans lequel chacun desdits supports de propagation magnétostrictifs en paires (11) est séparé du support adjacent de propagation magnétostrictif en paires (11) par un intervalle supérieur à celui par lequel les supports de propagation magnétostrictifs individuels (11) des paires respectives sont séparées l'un de l'autre.

4. Détecteur de position selon la revendication 1, dans lequel lesdites premières bobines (12) ont une pluralité de spires.

5. Détecteur de position selon la revendication 1, dans lequel lesdites premières bobines (12) sont croisées à leurs bornes de spire associées aux supports de propagation magnétostrictifs respectifs (11) de sorte que le courant électrique circulant à travers lesdites premières bobines (12) est inversé dans son sens auxdites bornes de spire entre les parties desdites premières bobines (12) enroulées autour des supports de propagation magnétostrictifs (11) et les parties restantes de celles-ci.

6. Détecteur de position selon la revendication 1, dans lequel ladite pluralité de supports de propagation magnétostrictifs (11) sont divisés en une pluralité de groupes et les supports de propagation magnétostrictifs adjacents (11) sont respectivement mis en paires à l'intérieur de chacun desdits groupes.

7. Détecteur de position selon la revendication 1, dans lequel ladite pluralité de supports de propagation magnétostrictifs (11) sont disposés en une orientation unique de façon à détecter une position monodimensionnelle.

8. Détecteur de position selon la revendication 1, dans lequel ladite pluralité de supports de propagation magnétostrictifs (11) sont disposés dans deux directions orthogonales de façon à détecter une position bidimensionnelle.

## Patentansprüche

1. Lagedetektor der umfaßt: Mehrere Medien (11) mit magnetostriktiver Fortpflanzung, die sich im wesentlichen parallel zueinander erstrecken, erste Spulen (12), die um die jeweiligen Endabschnitte der mehreren Medien (11) mit magnetostriktiver Fortpflanzung gewikkelt sind, und zweite Spulen (16), die um die jeweilige Erstreckung der mehreren Medien (11) mit magnetostriktiver Fortpflanzung gewickelt sind, Positionsindikatoren (19), die zum Erzeugen statischer Magnetfelder ausgelegt sind; wobei ein pulsförmiger Strom an die ersten Spulen (12) oder die zweiten Spulen (16) gegeben wird, um eine magnetostriktive Oszillationswelle in Bereichen der Medien mit magnetostriktiver Ausbreitung zu erzeugen, um die herum die ersten Spulen (12) gewickelt sind, oder an Positionen, die von den Positionsindikatoren (19) angezeigt werden, sodann eine Fortpflanzungszeitspanne durch die Medien (11) gemessen wird, die sich von demjenigen Zeitpunkt, zu dem die magnetostriktive Oszillationswelle erzeugt worden ist, bis zu einem Zeitpunkt erstreckt, zu dem die magnetostriktive Oszillationswelle die von den Positionsindikatoren (19) angezeigten Gebiete oder diejenigen Gebiete der Medien mit magnetostriktiver Fortpflanzung erreicht, um welche die ersten Spulen (12) gewickelt sind, und zwar durch das Fassen einer Induktionsspannung, die in der jeweils anderen der ersten Spulen (12) oder der zweiten Spulen (16) nach der Ankunft der Welle erzeugt worden ist, wobei die Positionen auf der Basis der gemessenen Zeitspanne festgelegt werden, wobei der Lagedetektor dadurch **gekennzeichnet** ist, daß benachbarte (2) der mehreren magnetostriktiven Medien (11) jeweils miteinander paarweise ausgeführt sind, wobei die jeweiligen Paare Medien (11) mit magnetostriktiver Fortpflanzung einzeln von den ersten Spulen (12) und den zweiten Spulen (16) umwickelt sind, so daß die magnetostriktive Oszillationswelle in den jeweiligen Paaren erzeugt wird, und die von den Positionsindikatoren (19) angezeigten Lagen erfaßt werden.

2. Lagedetektor nach Anspruch 1, wobei die mehreren magnetostriktiven Medien (11) mit regelmäßigen Abständen angeordnet sind.

3. Lagedetektor nach Anspruch 1, wobei jedes der paarweise ausgeführten Medien (11) mit magnetostriktiver Fortpflanzung von dem benachbarten paarweise ausgeführten Medium (11) mit magnetostriktiver Fortpflanzung mit einem Abstand angeordnet ist, der größer ist als derjenige, durch den die einzelnen Medien (11) mit magnetostriktiver Fortpflanzung der jeweiligen Paare voneinander entfernt sind.

4. Lagedetektor nach Anspruch 1, wobei die ersten Spulen (12) mehrere Windungen haben.

5. Lagedetektor nach Anspruch 1, wobei die ersten Spulen (12) an ihren den jeweiligen Medien (11) magnetostriktiver Fortpflanzung zugeordneten Umkehranschlüssen kreuzweise ausgeführt sind, so daß der jeweils durch die ersten Spulen (12) fließende elektrische Strom in seiner Richtung an den Umkehranschlüssen zwischen denjenigen Abschnitten der ersten Spulen (12), die um die jeweiligen Medien (11) mit magnetostriktiver Fortpflanzung gewickelt sind, und den verbleibenden Abschnitten derselben umgekehrt wird.

6. Lagedetektor nach Anspruch 1, wobei die mehreren Medien (11) mit magnetostraktiver Fortpflanzung in mehrere Gruppen geteilt sind und benachbarte Medien (11) mit magnetostriktiver Fortpflanzung jeweils innerhalb der einzelnen Gruppen paarweise ausgeführt sind.

7. Lagedetektor nach Anspruch 1, wobei die mehreren Medien (11) mit magnetostriktiver Fortpflanzung mit einer einzigen Ausrichtung ausgeführt sind, so daß eine eindimensionale Lage erfaßt wird.

8. Lagedetektor nach Anspruch 1, wobei die mehreren Medien (11) mit magnetostriktiver Fortpflanzung in zwei senkrecht aufeinander stehenden Richtungen angeordnet sind, so daß zweidimensionale Lagen erfaßt werden.

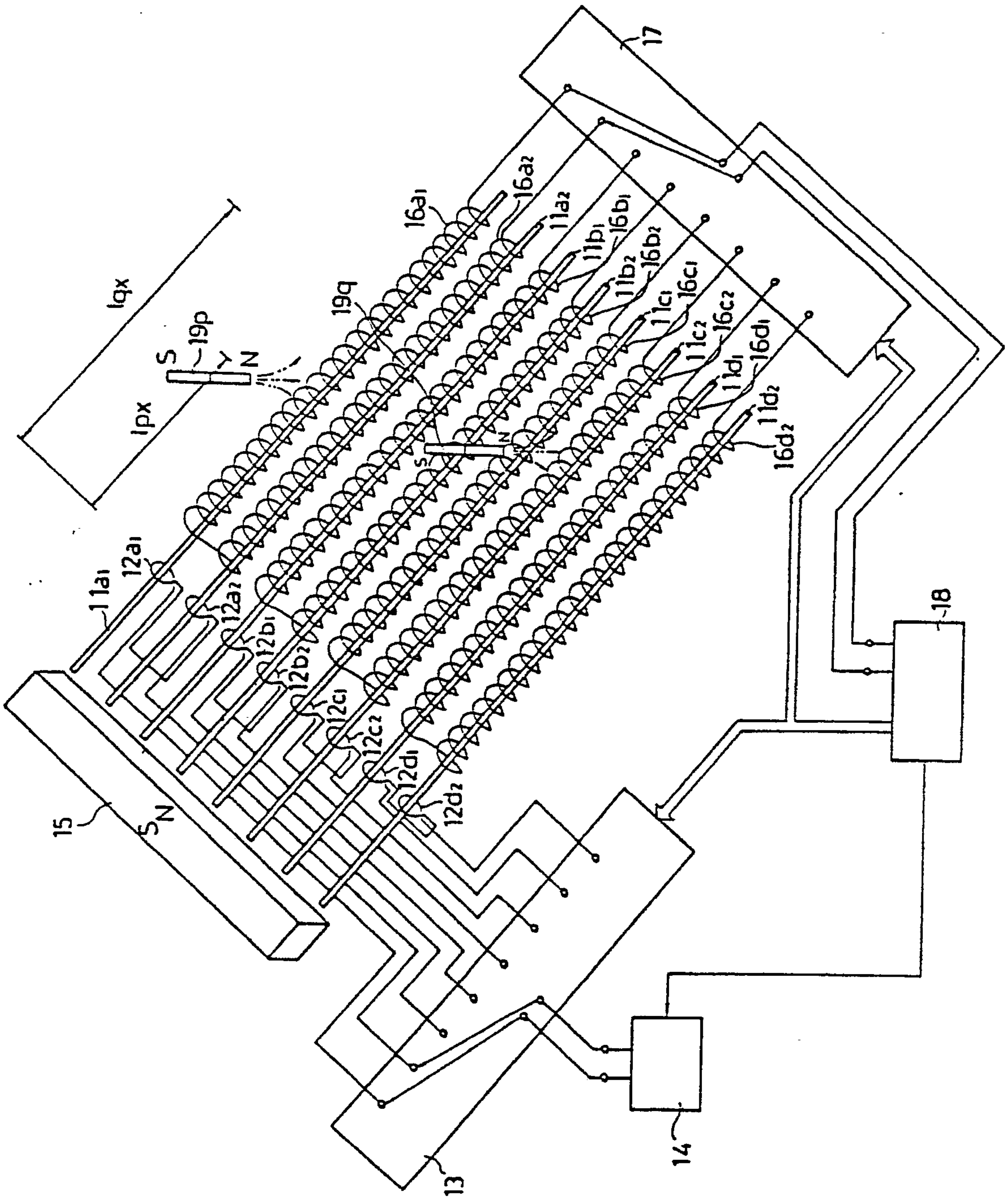
17
16a1
16a2
11a2
11b1
16b1
11b2
16b2
11c1
16c1
16c2
11c2
16d1
11d1
11d2
16d2
19q
19p
S
Y
N
lqx
lpx
11a1
12a1
12a2
12b1
12b2
12c1
12c2
12d1
12d2
15
18
14
13

Fig. 1

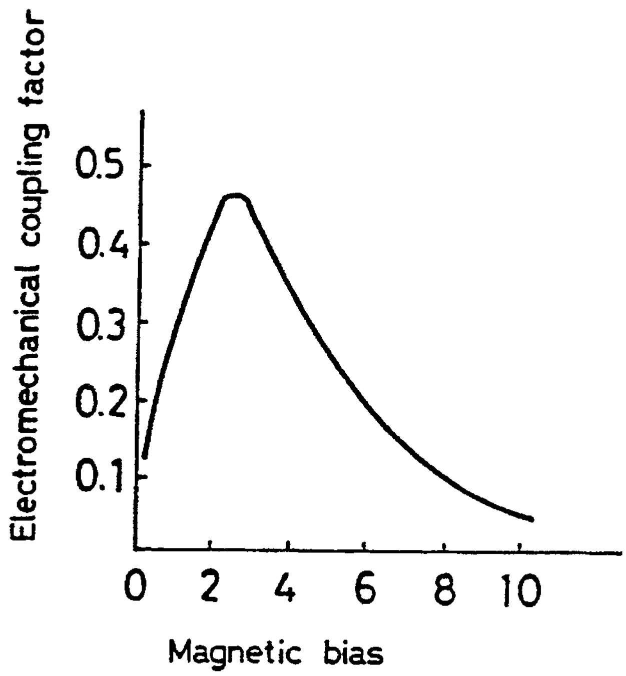
Electromechanical coupling factor
0.5
0.4
0.3
0.2
0.1
0
2
4
6
8
10
Magnetic bias

Fig. 2

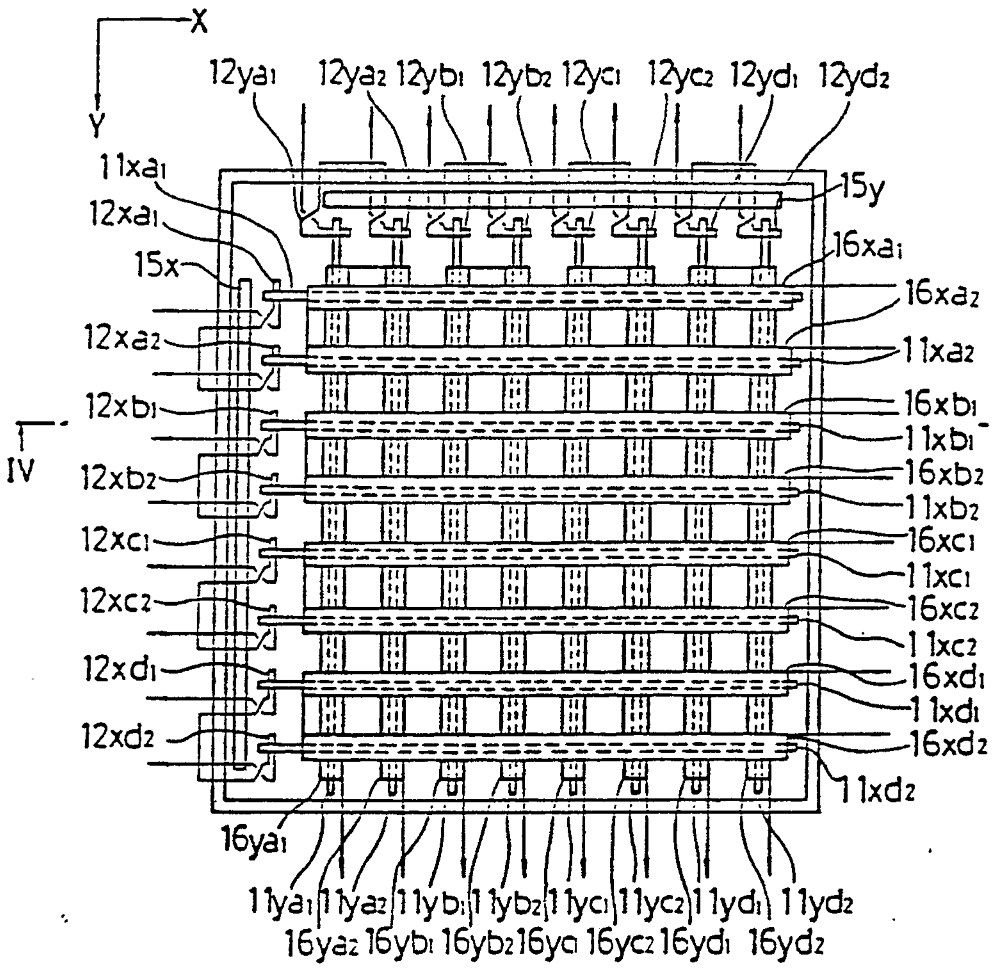
X
Y
12ya1 12ya2 12yb1 12yb2 12yc1 12yc2 12yd1 12yd2
11xa1
12xa1
15x
15y
16xa1
16xa2
12xa2
11xa2
12xb1
16xb1
11xb1
IV
12xb2
16xb2
IV
11xb2
12xc1
16xc1
11xc1
12xc2
16xc2
11xc2
12xd1
16xd1
11xd1
12xd2
16xd2
11xd2
16ya1
11ya1 11ya2 11yb1 11yb2 11yc1 11yc2 11yd1 11yd2
16ya2 16yb1 16yb2 16yc1 16yc2 16yd1 16yd2

Fig. 3

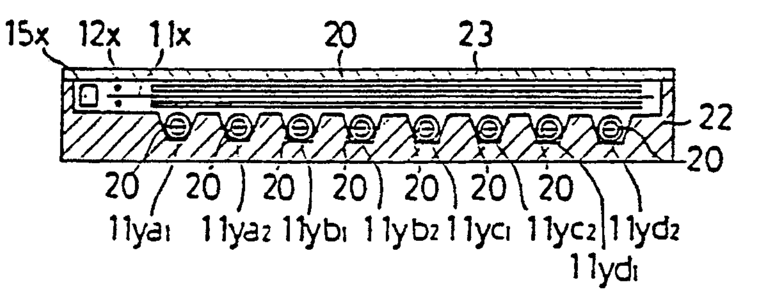
15x 12x 11x 20 23
22
20
20 20 20 20 20 20 20
11ya1 11ya2 11yb1 11yb2 11yc1 11yc2 11yd2
11yd1

Fig. 4

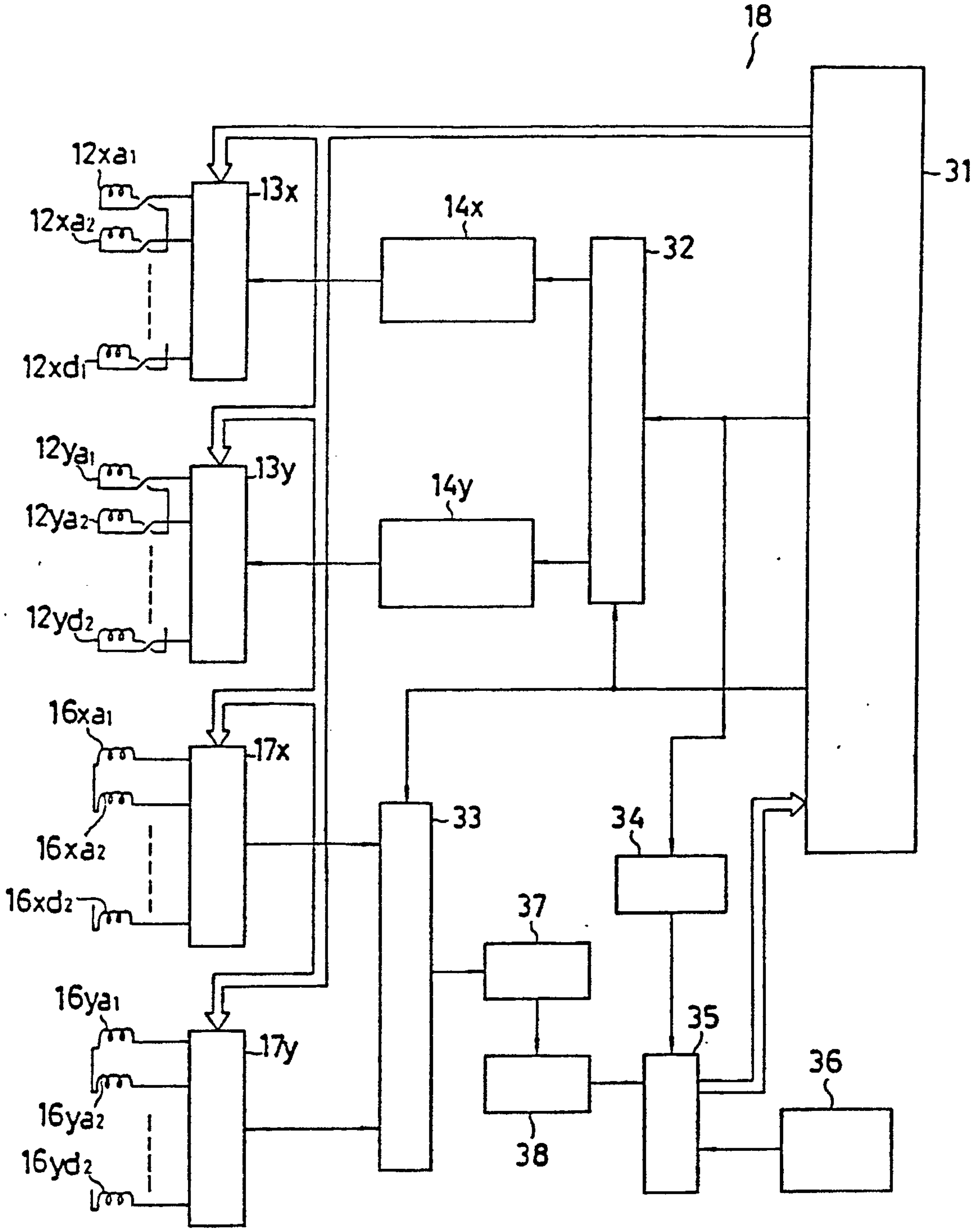
18
31
12xa1
13x
12xa2
14x
32
12xd1
12ya1
13y
12ya2
14y
12yd2
16xa1
17x
16xa2
33
34
16xd2
37
16ya1
35
17y
36
16ya2
38
16yd2

Fig. 5

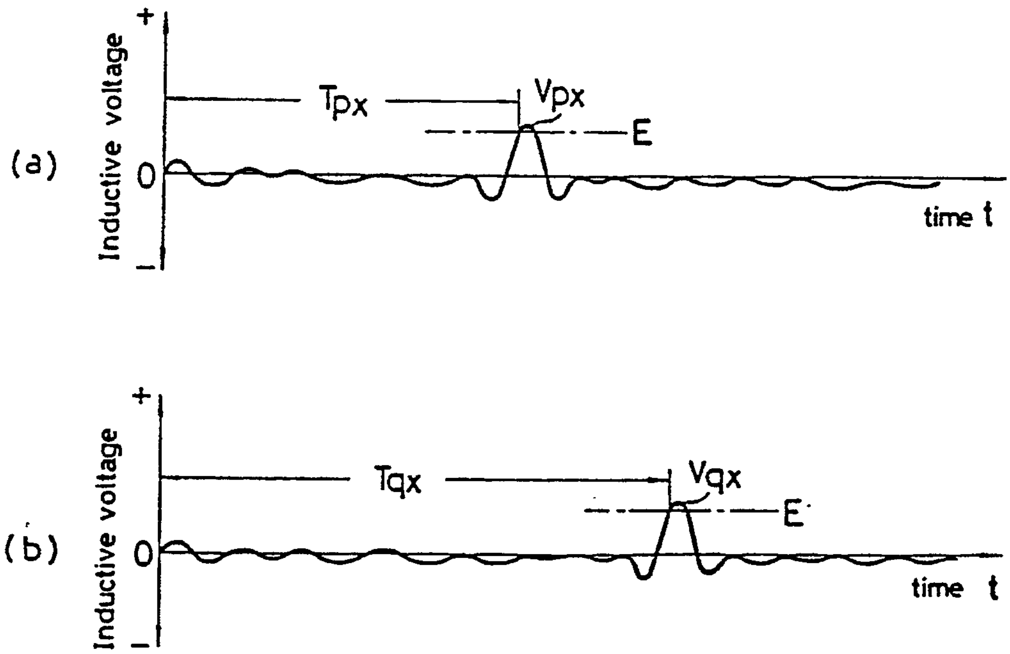
(a)
Inductive voltage
+
0
−
Tpx
Vpx
E
time t
(b)
Inductive voltage
+
0
−
Tqx
Vqx
E
time t

Fig. 6

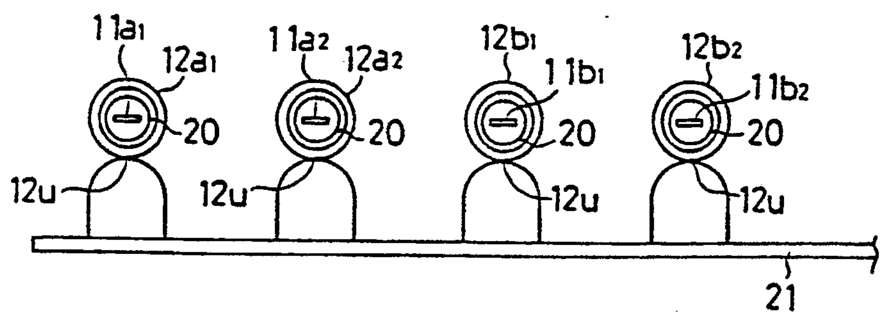
11a1
12a1
20
12u
11a2
12a2
20
12u
12b1
11b1
20
12u
12b2
11b2
20
12u
21

Fig. 7

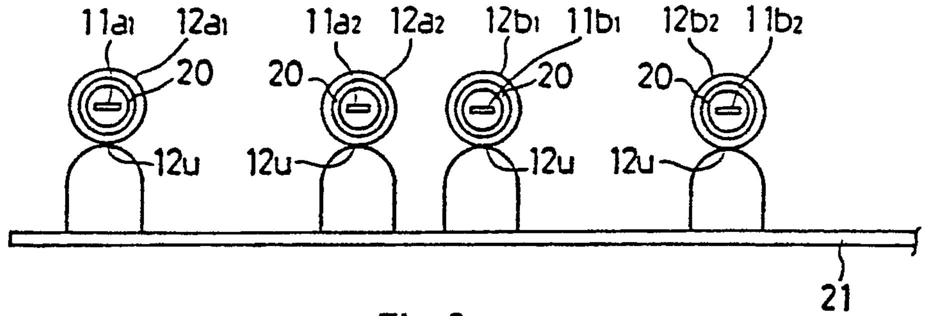


Fig. 8

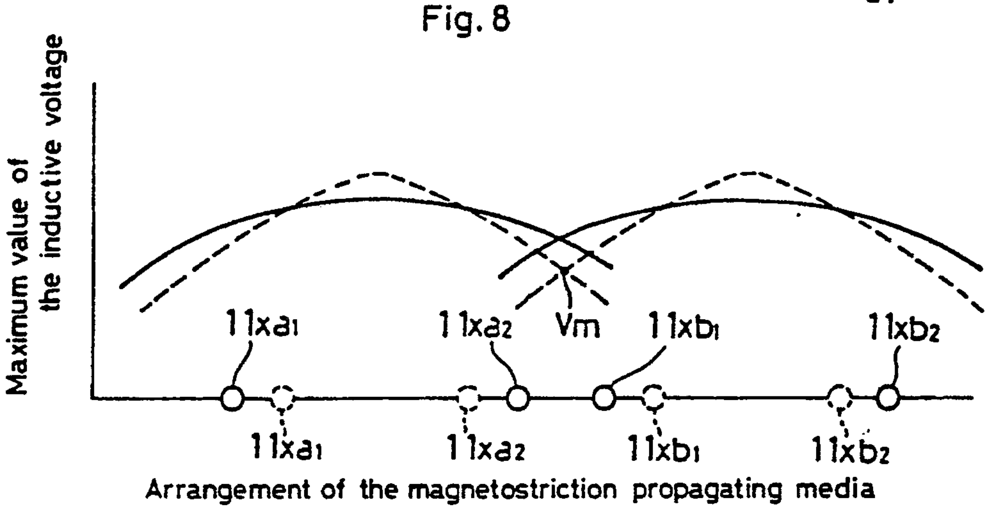


Fig.9

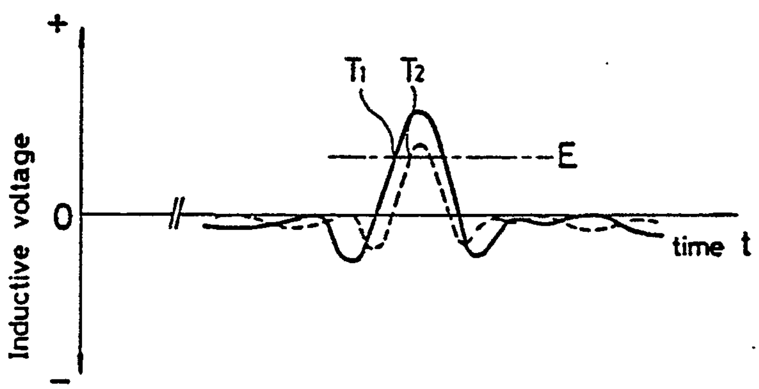


Fig.10

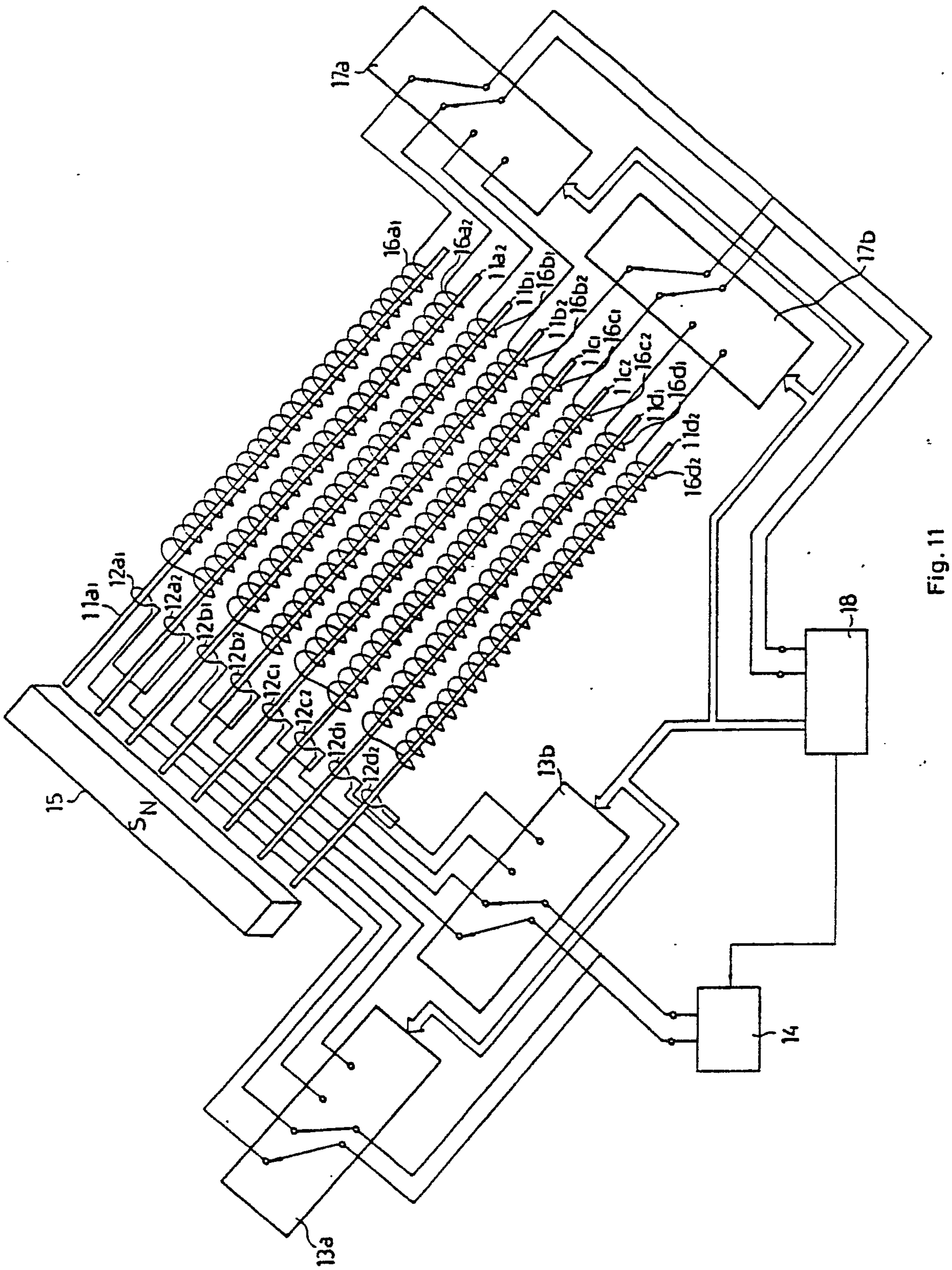
17a
17b
16a1
16a2
11a2
11b1
16b1
16b2
11b2
16c1
11c1
16c2
11c2
11d1
16d1
16d2
11d2
11a1
12a1
12a2
12b1
12b2
12c1
12c2
12d1
12d2
15
S
N
13b
18
14
13a

Fig. 11

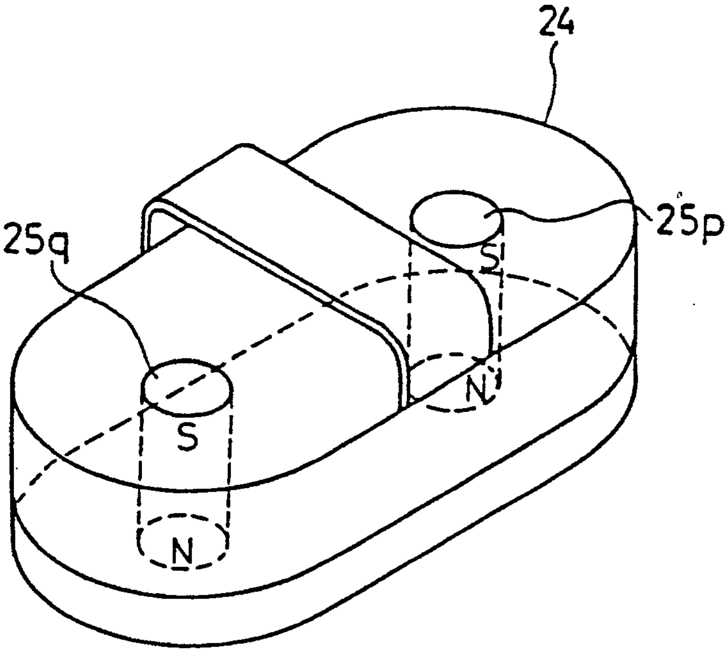


Fig. 12

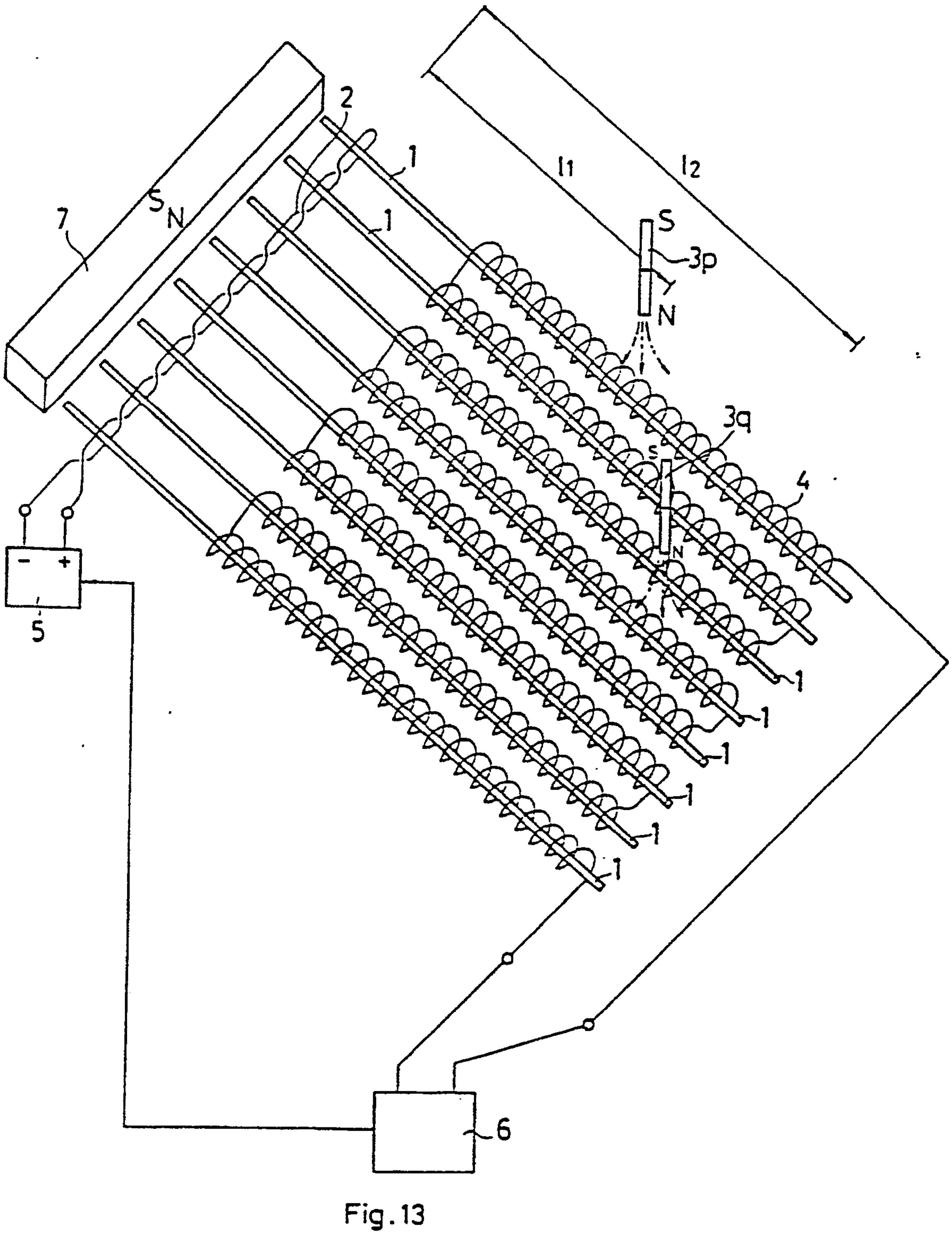


Fig. 13

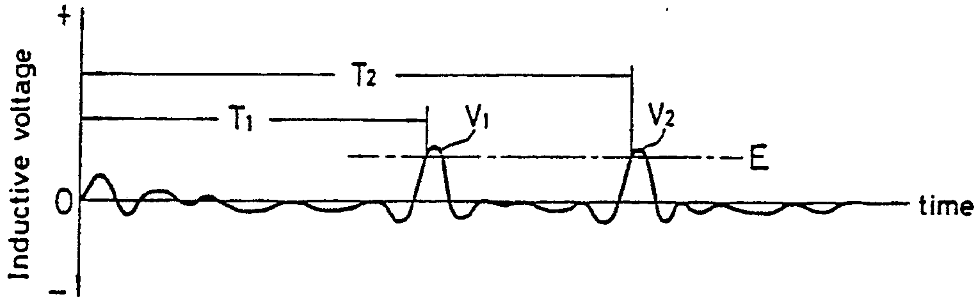
+
Inductive voltage
0
-
T2
T1
V1
V2
E
time

Fig.14

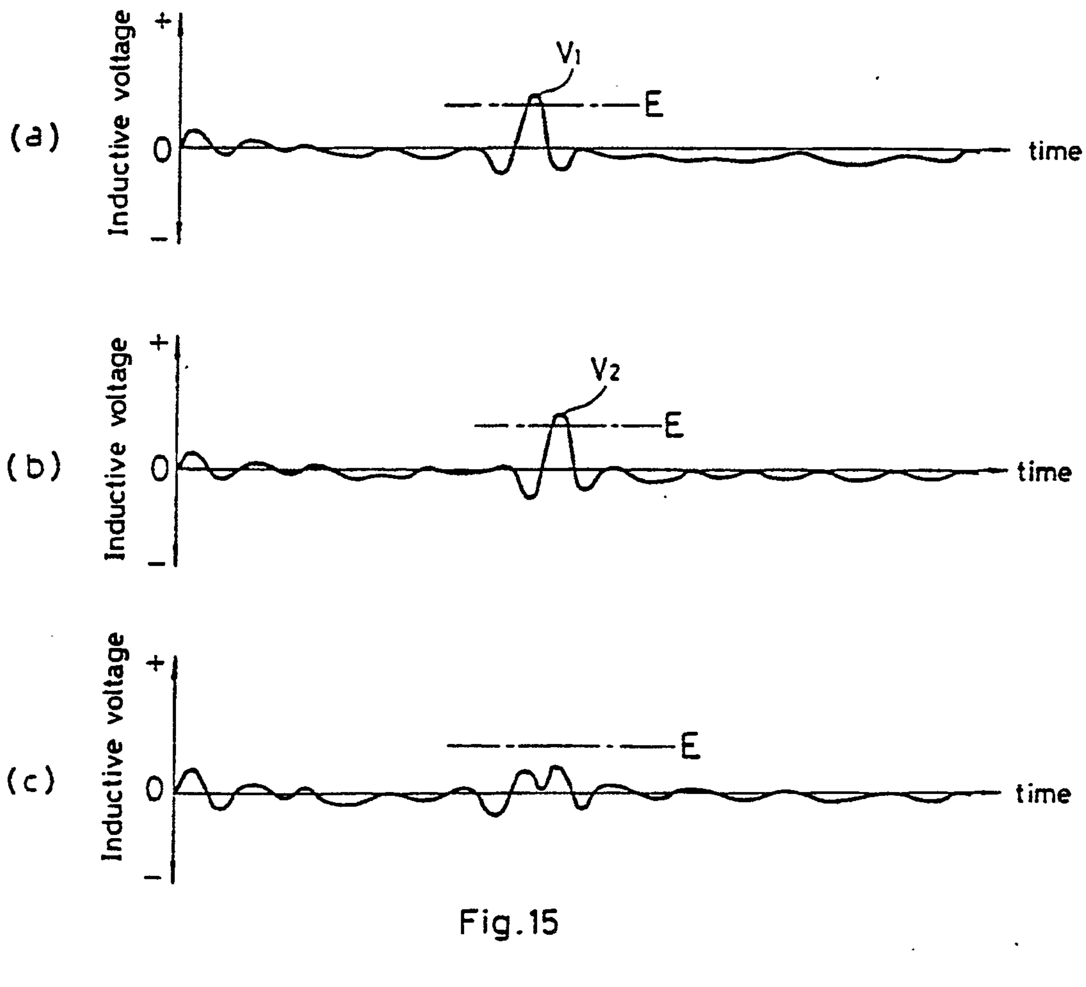
(a)
Inductive voltage
+
0
-
V1
E
time
(b)
Inductive voltage
+
0
-
V2
E
time
(c)
Inductive voltage
+
0
-
E
time

Fig.15